# EUROPEAN PATENT SPECIFICATION

(11) **EP 2 436 494 B1**
(45) Date of publication and mention of the grant of the patent: **09.11.2016**
(21) Application number: 11180458.9
(22) Date of filing: 07.09.2011
(51) Int. Cl.: B27G 19/02, B27B 5/16, B23D 45/04

(54) **Cutting machine with a safety cover**
Schneidemaschine mit einer Schutzanordnung
Découpeuse avec un ensemble de protection

(30) Priority: 04.10.2010 JP 2010225120
(43) Date of publication of application: 04.04.2012
(73) Proprietor: Makita Corporation, Anjo, Aichi 446-8502 (JP)
(72) Inventor: Miura, Masahiko, Anjo, Aichi 446-8502 (JP); Inai, Masahiko, Anjo, Aichi 446-8502 (JP)
(74) Representative: Kramer Barske Schmidtchen Patentanwälte PartG mbB

(56) References cited:
- EP-A1- 0 538 066
- EP-A1- 1 772 222
- EP-A1- 1 777 046
- EP-A2- 1 033 211
- EP-A2- 1 852 227
- DE-A1- 19 743 498
- JP-A- 8 216 112
- US-A1- 2009 223 339

## Description

This invention relates to a cutting machine, such as a bench circular sawing machine, in which a main body having a rotary blade is lowered to cut a workpiece.

### BACKGROUND ART

EP1777046 A1 discloses a lock device for locking and unlocking a cutting unit of a cutting machine, according to the preamble of claim 1. In a cutting machine such as a bench circular sawing machine, a main body having a motor-driven rotary blade is provided above a base and configured to be movable upward and downward so that a workpiece placed on the base can be cut by lowering the main body. A safety cover is provided in the main body. The safety cover is configured to cover the blade when the main body is at its top dead center. The safety cover is configured to be rotatable in a circumferential direction of the blade according as the main body is lowered, toward a position in which the main body is at its bottom dead center and the lower side of the blade is exposed, by a linkage or the like provided between the safety cover and the base (e.g., an arm or like element provided in the base to support the main body).

By making use of this motion of the safety cover, a safety cover lock mechanism is provided by which the main body in the normal state is locked at the top dead center so as not to accidentally be lowered. The safety cover lock mechanism typically includes a lock member, a biasing member, and a control member, as disclosed in Patent documents 1 and 2 listed below. The lock member is configured to be movable between an engagement position in which the main body is at the top dead center and the lock member engages with the safety cover to restrict the rotation of the safety cover which would otherwise be likely to move toward the position in which the lower side of the blade is exposed, and a disengagement position in which the engagement of the lock member with the safety cover is released. The biasing member is configured to bias the lock member toward the disengagement position. The control member is connected to the lock member and configured to be operable to move the lock member to the disengagement position as desired.

However, in the safety cover lock mechanism as described in Japanese unexamined Patent Publication 8-216112 A, the direction of operation of the control member (lever) toward the disengagement position is different from the direction of operation of a handle for lowering the main body, and thus the lever should be operated by an action independent from a series of operations of grasping the handle and lowering the main body. This is detrimental to the ease of operation of releasing the top-dead-center lock state of the main body. On the other hand, the safety cover lock mechanism as described in EP 1 852 227 A2 is configured to include a control member composed of three parts, such a large number of elements required would disadvantageously increase the cost.

It would be desirable to provide a cutting machine including a safety cover lock mechanism which can be formed easily and with which the operation of releasing the top-end-center lock state of the main body can be carried out without impairing the ease of operation.

The present invention has been made in an attempt to eliminate the above disadvantages, and illustrative, non-limiting embodiments of the present invention overcome the above disadvantages and other disadvantages not described above.

### SUMMARY OF THE INVENTION

(1) In a cutting machine according to one aspect, a safety cover lock mechanism which includes a control member having a single-piece structure is provided. The control member is connected with a lock member and includes an operable end disposed adjacent to, parallel to and rearwardly of a grip of a handle. An operation of gripping the operable end of the control member by a hand causes the lock member to move from its engagement position to its disengagement position.
(2) In the configuration mentioned above in (1), the control member may further include a middle shaft and a swingable end, wherein the middle shaft has a first end and a second end. The middle shaft disposed parallel to the grip of the handle. The swingable end being connected to the first end of the middle shaft and to the lock member in a position shifted from the middle shaft. The operable end may be connected to the second end of the middle shaft and include a portion extending parallel to the grip of the handle in a position shifted from the middle shaft. The control member may be configured to be rotatable about the middle shaft relative to the main body. The operable end may be configured to be gripped together with the grip of the handle, such that an operation of gripping the operable end of the control member together with the grip of the handle causes the swingable end of the control member to swing, thereby causing the lock member to move from the engagement position to the disengagement position.
(3) In the above-described configuration with the feature mentioned in (2), the lock member may be further configured to rotate when moving from the engagement position to the disengagement position in which the lock member is tilted. The swingable end of the control member is connected to the lock member in a position shifted from a center of rotation of the lock member by a pin provided in one of the swingable end and the lock member which pin is inserted in a through hole provided in the other of the swingable end and the lock member. The through hole being shaped like a circular arc which allows the lock member to further rotate from the disengagement position to a tipped position in which the lock member is further tilted. The safety cover includes an engageable portion configured to come in contact with the lock member and cause the lock member to move toward the tipped position according to a rotational motion of the safety cover toward the uncover position in which the blade is exposed.

Optionally, the lock member may include a shaft that is formed at a lower end of the lock member, and the safety cover may include an engageable recessed portion that is formed in the safety cover, wherein a rotation of the lock member is restricted by engagement of the shaft with the engageable recessed portion.

Also, the lock member may be rotatably attached to a boss provided protrusively at a main body side by a screw screwed in the boss. The lock member may have an oblong hole shaped like a circular arc of which a center of curvature coincides with the screw. The oblong hole may be provided in an upper portion of the lock member, a screw may be disposed inside the oblong hole and screwed in the main body side. The lock member may be rotatable to be angled according as the screw slides relatively inside the oblong hole, and the lock member may be pressed by the biasing member into the engagement position with the screw being positioned at an end of the oblong hole.

According to the configuration as mentioned above in (1), in which the control member is of a single-piece structure, the safety cover lock mechanism can be formed easily. Furthermore, the lock member can be moved from the engagement position to the disengagement position simply through the operation of gripping the operable end of the control member by a hand. Thus, the operation of releasing the top-dead-center lock state of the main body can be carried out smoothly and easily in a series of operations of grasping the handle and lowering the main body.

According to the additional features as mentioned above in (2), the control member can be easily formed in a reduced size. Moreover, the lock member can be regulated using the control member in an infallible manner.

According to the additional features as mentioned above in (3), even if the grip on the operable end of the control member is released when the main body is in a lowered position, the lock member is retained in the tipped position by the engageable portion. Thus, the lock member is prevented from protruding into a region on the base where a workpiece is cut, so that the lock member would never come in contact with the workpiece or interfering with the cutting operation.

### BRIEF DESCRIPTION OF THE DRAWINGS

The above aspects, other advantages and further features of the present invention will become more apparent by describing in detail illustrative, non-limiting embodiments thereof with reference to the accompanying drawings.
FIG. 1 is a perspective view of a bench circular sawing machine with an upper table in a miter saw mode.
FIG. 2 is a perspective view of the bench circular sawing machine in a table saw mode.
FIG. 3 is a front view of a safety cover lock mechanism.
FIG. 4 is a side view of the safety cover lock mechanism.
FIG. 5 is a plan view of the safety cover lock mechanism.
FIG. 6 is a schematic diagram showing an operation of the safety cover lock mechanism.

### DETAILED DESCRIPTION OF THE EMBODIMENTS

Exemplary embodiments of the present invention will be described hereinafter with reference to the accompanying drawings.

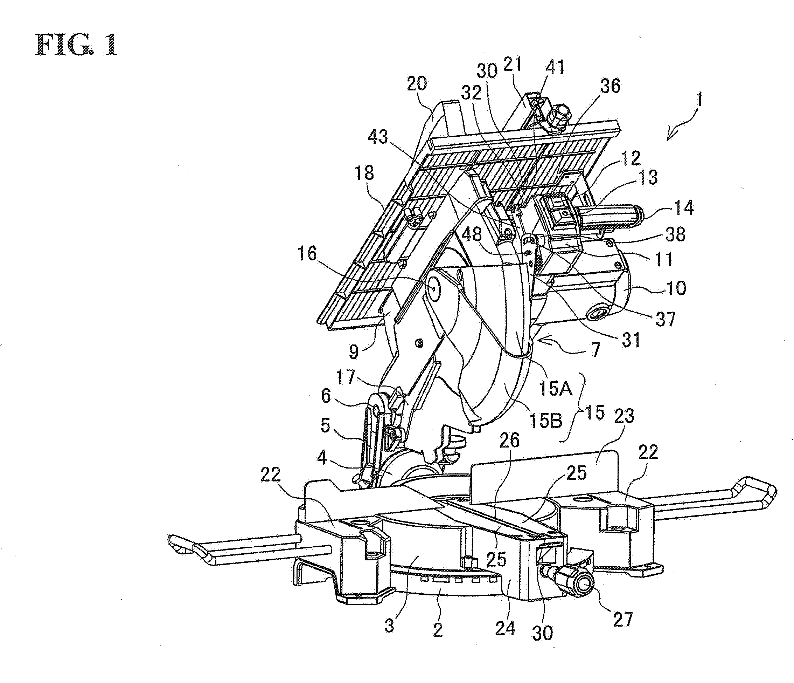

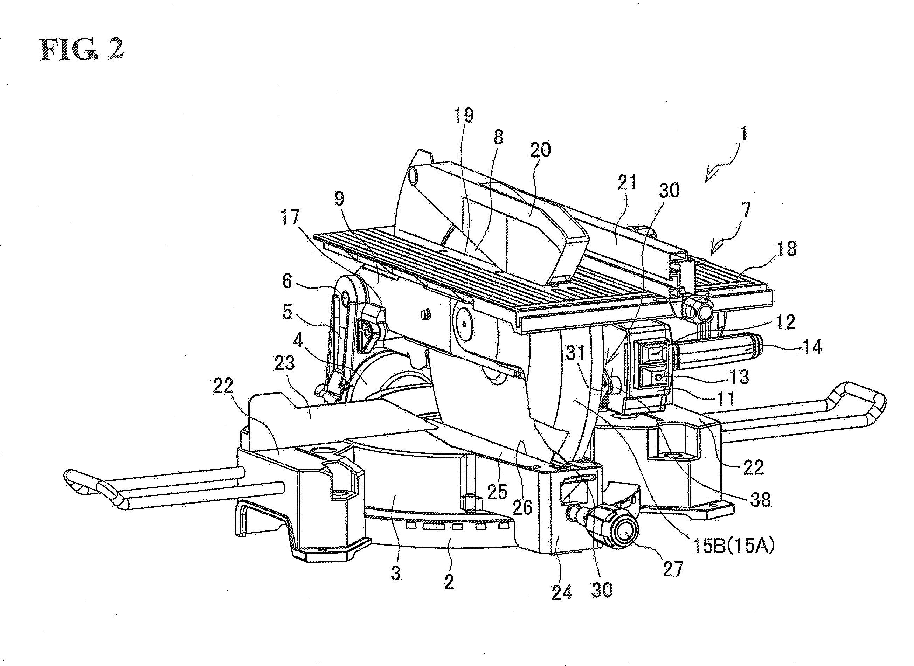

In FIGS. 1 and 2, a bench circular sawing machine 1 with an upper table is illustrated as an example of a cutting machine. In this bench circular sawing machine 1, a turntable 3 having a round shape as viewed from above is provided on the center of a base 2 in such a manner that the turntable 3 is rotatable horizontally. A connecting part 4 is provided at a rear end of the turntable 3 (Note: the lower, right direction in FIGS. 1 and 2 is assumed to be the front). An arm 5 is stood at the connecting part 4 in such a manner that the arm 5 can be tilted to the left and to the right by a lever (not shown) and fixed at a desired angle. A main body 7 of the bench circular sawing machine 1 is supported by a support shaft 6 provided at an upper end of the arm 5 in such a manner that the main body 7 can move upward and downward. The main body 7 includes a saw blade 8 that is a motor-driven rotary blade shaped like a disc, and is biased by a spring (not shown) toward a top dead center that is a position shown in FIG. 1. The main body 7 also includes a blade case 9 which covers an upper portion of the saw blade 8. At a right side of the blade case 9, a motor 10 in a horizontal orientation is connected thereto. A run switch 12 and a halt switch 13 are provided in a control panel 11 that is protrusively provided in front of the motor 10. At a right side of the control panel 11, a handle 14 having an oblong shape in a horizontal orientation is contiguously connected thereto.

The blade case 9 includes a safety cover 15 which is configured to cover a lower portion of the saw blade 8. This safety cover 15 includes an inner cover 15A and an outer cover 15B. The inner cover 15A is shaped like a fan as viewed from a side thereof. The outer cover 15B is also shaped like a fan as viewed from a side thereof, and is a size larger than the inner cover 15A. The inner and outer covers 15A, 15B are both configured to be rotatable about a support pin 16. This safety cover 15 is in a cover position when the main body 7 is at its top dead center. The cover position is a position of the safety cover 15 in which the inner cover 15A and the outer cover 15B are arranged side by side in the circumferential direction of the saw blade 8 so that the saw blade 8 (the lower portion thereof) is covered with the inner and outer covers 15A, 15B. When the main body 7 is lowered from the top dead center, the outer cover 15B is rotated frontwardly by a linkage 17 provided between the front surface of the arm 5 and the outer cover 15B, and is engaged with the inner cover 15A when the outer cover 15B comes to a position in which it is laid over the inner cover 15A, so that the inner cover 15A is thereafter rotated together with the outer cover 15B. When the main body 7 is moved and reaches its bottom dead center, the safety cover 15 comes to a position (uncover position) frontward of the blade case 9 in which the lower portion (edge) of the saw blade 8 is exposed.

An upper table 18 is provided on the blade case 9. The upper table 18 is shaped like a rectangle as viewed from above, and configured to become horizontally oriented when the main body 7 comes to a predetermined lowered position. The upper table 18 has a slit 19 through which an upper edge portion of the saw blade 8 protrudes. On top of the upper table 18, an upper cover 20 configured to normally cover the upper edge portion of the saw blade 8, and a parallel ruler 21 configured to guide a workpiece along a line parallel to the saw blade 8 are provided.

The base 2 includes stage portions 22 disposed at right and left sides of the turntable 3. A guide fence 23 extending in the right/left direction is provided on top of these stage portions 22 across the turntable 3. The turntable 3 includes an extension portion 24 configured to protrude radially from the center of the front surface of the turntable 3. A pair of right and left insert plates 25 is provided on top of the extension portion 24 and the turntable 3, and a slit 26 into which the saw blade 8 passes when the main body 7 is lowered is provided between the insert plates 25 and extends in the radial direction of the turntable 3. A grip 27 for use in swiveling the turntable 3 is provided at a front end of the extension portion 24.

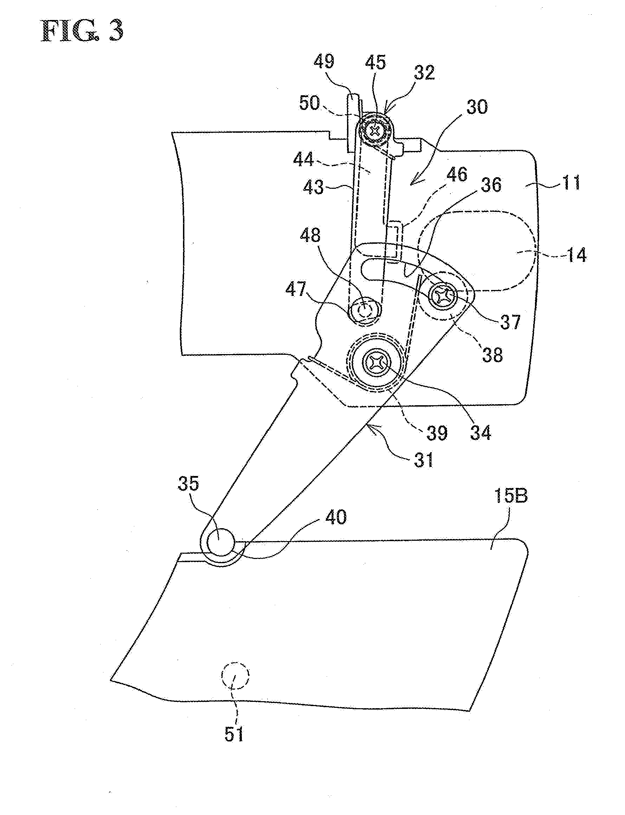

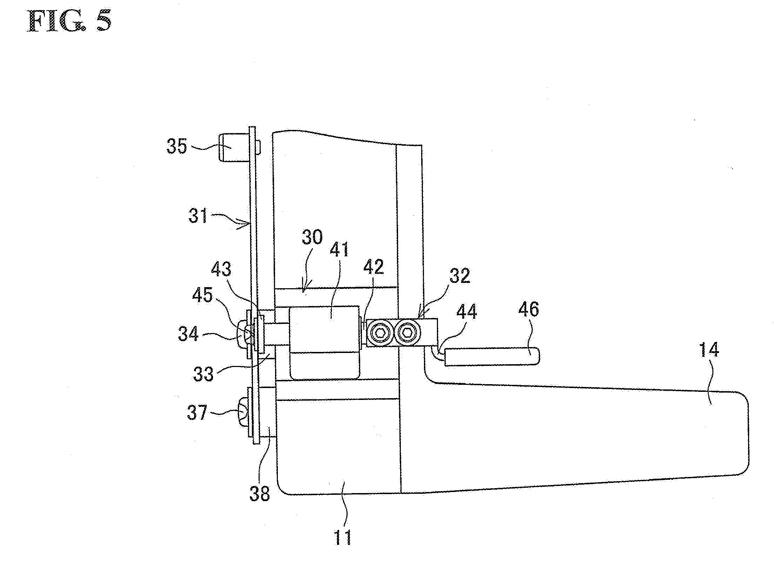

The main body 7 further includes a safety cover lock mechanism 30 configured to restrict the lowering motion of the main body 7 at the top dead center. As shown in FIGS. 3-5, this safety cover lock mechanism 30 includes a lock lever 31, as an example of a lock member, provided on a left side surface of the control panel 11 (at the side facing the blade case 9), and a control lever 32, as an example of a control member, configured to be operable to rotate the lock lever 31.

The lock lever 31 is shaped like a fan-like plate tapering toward a lower end, and rotatably attached at its midpoint to a lower boss 33 protrusively provided on the side surface of the control panel 11 by a screw 34 which is screwed from leftward in the lower boss 33. A shaft 35 protruding toward the blade case 9 is fixed to a lower-end portion of the lock lever 31. An oblong hole 36 shaped like a circular arc *(i.e.,* in the form of a segment of a circle) of which a center of curvature coincides with the axis of the screw 34 is provided in an upper-end portion of the lock lever 31. A screw 37 disposed inside the oblong hole 36 is screwed in an upper boss 38 protrusively provided, in a position above the lower boss 33, on the side surface of the control panel 11.

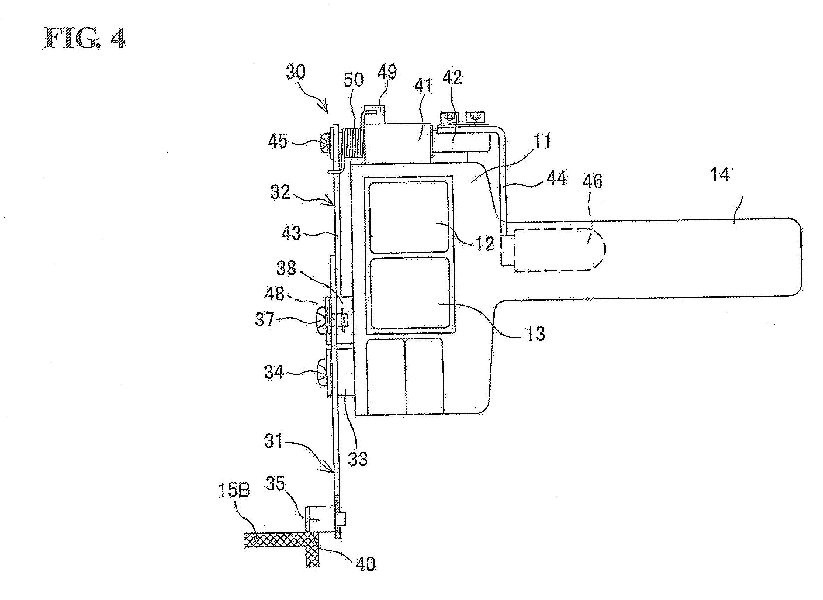

The lock lever 31 configured as described above is rotatable in a plane parallel to the side surface of the control panel 11 within a range of angles defined by the screw 37 relatively sliding inside the oblong hole 36. Since a torsion spring 39, as an example of a biasing member, which has a first end engaged with the lock lever 31 and a second end engaged with the upper boss 38 is fitted on the lower boss 33, the lock lever 31 normally is pressed into a first angular position (engagement position) as shown in FIGS. 3 and 4. In the first angular position, the lock lever 31 is in a substantially upright position with the screw 37 being positioned at a front end of the oblong hole 36.

In this first angular position, the shaft 35 at the lower-end portion of the lock lever 31 is engaged with an engageable recessed portion 40 that is provided at an upper edge of a side of the outer cover 15B corresponding to the right side of the blade case 9.

The control lever 32 includes a middle shaft 42, a swingable plate 43 as an example of a swingable end and an operable plate 44 as an example of an operable end. The middle shaft 42 of the control lever 32 is disposed to extend in the right/left direction and is rotatably held by a holding tube 41 provided on an upper surface of the control panel 11. The swingable plate 43 is fixed at its upper-end portion to the left end of the middle shaft 42 by a screw 45, disposed to extend in a downward direction perpendicular to the middle shaft 42, and connected at its lower-end portion to the lock lever 31. The operable plate 44 is secured at its upper-end portion by a screw to an upper surface of a right-end portion of the middle shaft 42, bent at its midpoint in a downward direction parallel to the swingable plate 43, and disposed at its lower-end portion to extend in a rightward direction parallel to the handle 14 in a position adjacent to the rear side of the handle 14. A rubber cover 46 is fitted on an end portion of the operable plate 44.

The lower-end portion of the swingable plate 43 is connected to the lock lever 31 by a pin 48 which is loosely fitted in a through hole 47 formed in a position between the lower boss 33 and the oblong hole 36 in the lock lever 31. The through hole 47 is shaped like a circular arc *(i.e.,* in the form of a segment of a circle) of which a center of curvature coincides with the axis of the screw 34, and configured to be located rearwardly of the screw 34 with its front end positioned higher than its rear end when the lock lever 31 is in the first angular position.

A torsion spring 50 is provided on the middle shaft 42. The torsion spring 50 has a first end engaged with an engagement piece 49 provided at a holding tube 41 side, and a second end engaged with swingable plate 43. The torsion spring 50 is configured to bias the control lever 32 clockwise in FIG. 3 *(i.e.,* in such a direction that the swingable plate 43 is caused to rotate rearward), so that the pin 48 of the swingable plate 43 is brought into contact with the upper inner edge of the through hole 47.

When the control lever 32 is rotated counterclockwise *(i.e.,* in such a direction that the swingable plate 43 is caused to rotate frontward) against the biasing force applied by the torsion spring 50, the pin 48 is brought into contact with the front end of the through hole 47, and causes the lock lever 31 to rotate clockwise against the biasing force applied by the torsion spring 39. Thus, the lock lever 31 can be positioned in a second angular position (disengagement position) in which the shaft 35 at the lower-end portion of the lock lever 31 is away from the engageable recessed portion 40 of the outer cover 15B.

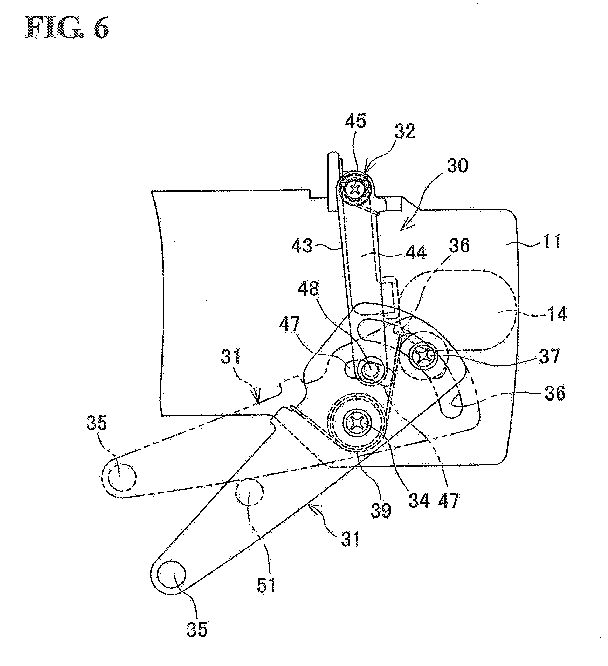

The outer cover 15B includes an engageable projection 51, as an example of an engageable portion, protrusively provided in a position on an outer surface of the outer cover 15B corresponding to the lock lever 31, which is a position lower than and slightly frontward of the engageable recessed portion 40 when the safety cover 15 is in the cover position. This engageable projection 51 is configured to move according to the frontward rotation of the outer cover 15B along a path located between the screw 34 and the shaft 35 of the lock lever 31. When the main body 7 is lowered and the outer cover 15B is rotated to the front, the engageable projection 51 is brought into contact with the lower edge of the lock lever 31 and pushes the lock lever 31 upward. It causes the lock lever 31 to rotate clockwise into a third angular position (tipped position) in which the lock lever 31 is further rotated clockwise and tilted beyond the second angular position, as indicated by chain double-dashed lines in FIG. 6.

In the bench circular sawing machine 1 configured as described above, when the main body 7 is at the top dead center as in FIG. 1, the shaft 35 at the lower-end portion of the lock lever 31 biased to the first angular position is engaged, as described above, with the engageable recessed portion 40 of the outer cover 15B of the safety cover 15 located in the cover position. Therefore, even if the main body 7 in this state would be directly pushed down or lowered by gripping the handle 14 alone, the frontward rotation of the outer cover 15B is restricted by the lock lever 31 and the lowering motion of the main body 7 is prevented by the linkage 17. In other words, the main body 7 is locked at the top dead center.

In operation, to use the bench circular sawing machine 1 in the miter saw mode, first, a workpiece is pressed against the guide fence 23 and positioned on the turntable 3. Next, the run switch 12 is turned on to activate the motor 10, to cause the saw blade 8 to rotate. Then, the handle 14 is held by a hand and the main body 7 is lowered. At this step of operation, the operable plate 44 of the control lever 32 is held by the same hand as used to hold the handle 14. Accordingly, the operable plate 44 is pulled toward the handle 14, and the control lever 32 rotates counterclockwise against the biasing force applied by the torsion spring 50. As a result, the swingable plate 43 is swung to the front, and the pin 48 is brought into contact with the front end of the through hole 47, causing the lock lever 31 to rotate clockwise against the biasing force applied by the torsion spring 39.

The thus-clockwise rotated lock lever 31 is tilted into the disengagement position in which the shaft 35 is away from the engageable recessed portion 40, as indicated by solid lines in FIG. 6. Therefore, the top-dead-center lock state of the main body 7 is released, and the main body 7 can be lowered by the hand holding the handle 14. In this step of operation, the outer cover 15B is caused to rotate frontward according to the lowering motion of the main body 7, and the inner cover 15A follows the outer cover 15B and rotates frontward until the lower edge of the saw blade 8 is exposed. In this way, the bench circular sawing machine 1 becomes ready to cut the workpiece positioned on the turntable 3.

When the main body 7 is in a lowered position, the engageable projection 51 of the outer cover 15B is brought into contact with the lower edge of the lock lever 31 as described above, and the lock lever 31 is pushed up into the tipped position as indicated by chain double-dashed lines in FIG. 6. In this state, if the grip on the operable plate 44 is released, the control lever 32 is caused to rotate counterclockwise again by the biasing force of the torsion spring 50, and the pin 48 is moved to the rear end of the through hole 47 according as the swingable lever 32 swings rearward. In this way, the control lever 32 moves back to the original position, while the lock lever 31 is kept in the tipped position. Therefore, any undesirable incident such as the contact of the lock lever 31 with the workpiece can be prevented.

After the cutting operation is finished and the downward force applied to the main body 7 during the cutting operation is released, the main body 7 is raised by a spring provided at the support shaft 6, and the outer cover 15B follows the movement of the linkage 17 and rotates downward, and causes the inner cover 15A to follow the outer cover 15B. When the main body 7 comes back to the top dead center, the inner and outer covers 15A and 15B come back to the cover position, and the lock lever 31, which has been released from the upwardly pushing force applied by the engageable projection 51, is also caused to come back to the first angular position by the biasing force of the torsion spring 39. Consequently, the shaft 35 is engaged with the engageable recessed portion 40 of the outer cover 15B again, so that the main body 7 is locked at the top dead center.

To use the bench circular sawing machine 1 in the table saw mode, the main body 7 is lowered to, and locked in, a predetermined position, so that the upper table 18 is in the horizontal position. In this state, the run switch 12 is turned on to activate the motor 10, to cause the saw blade 8 to rotate. Then, a workpiece is placed on the upper table 18 and slid along the parallel ruler 21 from the front backward to the saw blade 8. In this way, the workpiece is cut by the saw blade 8 protruding through the slit 19 beyond the top of the upper table 18.

As described above, with the bench circular sawing machine 1 configured according to the above-described embodiment, the safety cover lock mechanism 30 is configured to include the control lever 32 having a single-piece structure. The control lever 32 is connected with the lock lever 31, and includes the operable plate 44 disposed adjacent to, parallel to and rearwardly of the grip of the handle 14. The operation of gripping the operable plate 44 of the control lever 32 by a hand causes the lock lever 31 to move from the engagement position to the disengagement position. Therefore, the safety cover lock mechanism 30 can be formed easily. Furthermore, the control lever 32 can be moved from the engagement position to the disengagement position simply through the operation of gripping the operable plate 44 by a hand, and thus the operation of releasing the top-dead-center lock state of the main body 7 can be carried out smoothly and easily in a series of operations of grasping the handle 14 and lowering the main body 7.

Particularly, in the present embodiment, the control lever 32 is configured to be rotatable about the axis (disposed parallel to the grip of the handle 14) of the middle shaft 42 relative to the main body 7. The swingable plate 43 is connected to a first end of the middle shaft 42 and to the lock lever 31 in a position shifted from the axis of the middle shaft 42, and the operable plate 44 is connected to a second end of the middle shaft 42 and includes a portion extending parallel to the grip of the handle 14 in a position shifted from the axis of the middle shaft 42. Since the operable plate 44 is configured to be gripped together with the grip of the handle 14, in such a manner that the operation of gripping the operable plate 44 of the control lever 32 together with the grip of the handle 14 causes the swingable plate 43 of the control lever 32 to swing, thereby causing the lock lever 31 to move from the engagement position to the disengagement position. Therefore, the control lever 32 can be disposed adjacent to the control panel 11, and can be easily designed and formed in a reduced size. Moreover, the lock lever 31 can be regulated using the control member in an infallible manner.

Furthermore, in the present embodiment, the lock lever 31 is configured to rotate when moving from the engagement position to the disengagement position in which the lock lever 31 is tilted. The swingable plate 43 of the control lever 32 is connected to the lock lever 31 in a position shifted from the center of rotation of the lock lever 31 by the pin 48 provided in the swingable plate 43 which is inserted in the through hole 47 provided in the lock lever 31, the through hole 47 being shaped like a circular arc which allows the lock lever 31 to further rotate from the disengagement position to the tipped position in which the lock lever 31 is further tilted. The outer cover 15B of the safety cover 15 includes the engageable projection 51 configured to come in contact with the lock lever 31 and cause the lock lever 31 to move toward the tipped position according to the rotational motion of the safety cover 15 toward the uncover position in which the saw blade 8 is exposed. Therefore, even if the grip on the operable plate 44 of the control lever 32 is released when the main body 7 is in the lowered position, the lock lever 31 is retained in the tipped position by the engageable projection 51. Thus, the lock lever 31 is prevented from protruding into a region on the turntable 7 where a workpiece is cut, so that the lock member would never come in contact with the workpiece or interfering with the cutting operation.

Although an exemplary embodiment of the present invention has been described above, the present invention is not limited to this illustrative, non-limiting embodiment, and may be carried out into practice in various other ways. Thus, it is contemplated that various modifications and changes may be made to the exemplary embodiments of the invention without departing from the scope of the embodiments of the present invention as defined in the appended claims.

For example, in the safety cover lock mechanism in the above-described embodiment, the through hole shaped like a circular arc *(i.e.,* a segment of a circle) is provided in the lock lever, whereas the pin is provided on the swingable plate of the control lever. However, an alternative configuration is possible in which the pin is provided on the lock member and the through hole shaped like a circular arc is provided in the control member so that the swinging motion of the lock member to the tipped position is permitted. Furthermore, as long as the lock member never interferes with the operation when the main body is lowered, the through hole may not be shaped like a circular arc so that the lock member is not permitted to rotate to the tipped position.

Moreover, in the above-described embodiment, the middle shaft, the swingable plate and the operable plate of the control lever are formed separately and assembled together, but it is possible to make the control member by bending a single-piece plate-like or rod-like member. The biasing member for the lock member or the control member is also not limited to the torsion spring as illustrated. Any other means for biasing these members, such as an extension spring, a compression spring, a weight, etc., may be adopted, instead. It is also to be understood that the biasing member for biasing the control member can be omitted.

Furthermore, the lock member may engage with the safety cover in any other way different from the above-described embodiment in which the shaft is formed at the lower-end portion of the lock member and configured to be engageable with the engageable recessed portion provided in the safety cover. For example, the lock member may be bent at its lower end to form an engageable piece which may be used instead of the shaft, and an engageable projection which may be used instead of the engageable recessed portion may be provided in the safety cover. In short, any configuration in which the lock member can engage with the safety cover in the cover position may be applicable. It is also to be understood that the safety cover is not limited to the illustrated configuration in which an inner cover and an outer cover are assembled together.

In addition, the above-described embodiment shows a particular configuration in which the operable end of the control member is located adjacent to the handle having an oblong shape extending in the horizontal orientation, but this configuration is illustrated only by way of example. A handle (a grip thereof) may be disposed in the vertical orientation, in this configuration, as well, the operable end may be disposed adjacent to, parallel to and rearwardly of the grip of the handle, so that the same advantage as described in connection with the above embodiment can be obtained. In this alternative configuration, to be more specific, it is conceivable that an operable end having an oblong shape with its midpoint pivotally attached to the main body side is provided, for example, so that an upper portion of the operable end may be gripped together with the handle to cause a lower portion of the operable end is swung frontward or rearward, thereby causing the lock member to move. It is also to be understood that the handle may not be a bar-like member as a whole, but may suffice if it includes a grip having an oblong shape extending straightly in a vertical section and disposed adjacent to the operable end, for example, the handle may be shaped like a letter D, etc.

Although the lock member is rotated in the above-described embodiment between the engagement position and the disengagement position through the operation of the control member, the lock member may be configured to be slidable between the engagement position and the disengagement position so that the lock member can be linearly translated through the control member to render the selection available between the top-dead-center lock state and its release. Accordingly, depending on the structure of the lock member, the control member may be configured not to be gripped and shifted frontward but to be pushed down by a hand gripping the control member.

The cutting machine consistent with the present invention is not limited to the bench circular sawing machine with an upper table, but a bench circular sawing machine without an upper table, a slide-type bench circular sawing machine in which a main body is slidable frontward and rearward, and the like may be configured in accordance with the present invention. That is, the present invention is applicable to any cutting machine including a safety cover that is rotatable to a cover position in which a blade is covered, by a linkage according to a lowering motion of a main body, and a handle that is disposed frontwardly of the main body and configured to be operable for lowering the main body, which handle includes a grip having an oblong shape extending straightly in a vertical section.

## Claims

1. A cutting machine comprising:
a base (2); and
a main body (7) provided above the base (2) and configured to be movable upward and downward, the main body (7) including a rotary blade (8), a handle (14), a safety cover (15), a linkage (17) and a safety cover lock mechanism (30), the handle (14) being disposed frontwardly of the main body (7) and configured to be operable for lowering the main body (7), the handle (14) including a grip having an oblong shape extending straightly in a vertical section, the linkage (17) being disposed between the main body (7) and the safety cover (15), the safety cover (15) being rotatable between a cover position in which the safety cover (15) covers the blade (8) and an uncover position in which the blade (8) is exposed, the cover position being a position in which the safety cover (15) is located relative to the main body (7) at a top dead center thereof, the safety cover (15) being configured to rotate according to a lowering motion of the main body (7) by the linkage (17) from the cover position toward the uncover position,
wherein the safety cover lock mechanism (30) includes a lock member (31) and a biasing member (39),
**characterized in that**
the lock member (31) is configured to be movable between an engagement position in which the lock member (31) engages with the safety cover (15) that is located in the cover position when the main body (7) is at the top dead center, to restrict a rotational motion of the safety cover (15), and a disengagement position in which engagement of the lock member (31) with the safety cover (15) is released;
the biasing member (39) is configured to bias the lock member (31) toward the engagement position,
the safety cover lock mechanism (30) further includes a control member (32) having a single-piece structure, the control member (32) being connected with the lock member (31), the control member (32) including an operable end (44) disposed adjacent to, parallel to and rearwardly of the grip of the handle (14), wherein an operation of gripping the operable end (44) of the control member (32) by a hand causes the lock member (31) to move from the engagement position to the disengagement position, and
the control member (32) further includes a middle shaft (42) disposed parallel to the grip of the handle (14) and a swingable end (43), the middle shaft (42) having a first end and a second end, the swingable end (43) being connected to the first end of the middle shaft (42) and to the lock member (31) in a position shifted from the middle shaft (42), the operable end (44) being connected to the second end of the middle shaft (42) and including a portion extending parallel to the grip of the handle (14) in a position shifted from the middle shaft (42), the control member (32) being configured to be rotatable about the middle shaft (42) relative to the main body (7), the operable end (44) being configured to be gripped together with the grip of the handle (14), such that an operation of griping the operable end (44) of the control member (32) together with the grip of the handle (14) causes the swingable end (43) of the control member (32) to swing, thereby causing the lock member (31) to move from the engagement position to the disengagement position.

2. The cutting machine according to claim 1, **characterized in that** the lock member (31) is further configured to rotate when moving from the engagement position to the disengagement position in which the lock member (31) is tilted, wherein the swingable end (43) of the control member (32) is connected to the lock member (31) in a position shifted from a center of rotation of the lock member (31) by a pin provided in one of the swingable end (43) and the lock member (31) which is inserted in a through hole (47) provided in the other of the swingable end (43) and the lock member (31), the through hole (47) being shaped like a circular arc which allows the lock member (31) to further rotate from the disengagement position to a tipped position in which the lock member (31) is further tilted; and
wherein the safety cover (15) includes an engageable portion (51) configured to come in contact with the lock member (31) and cause the lock member (31) to move toward the tipped position according to the rotational motion of the safety cover (15) toward the uncover position in which the blade (8) is exposed.

3. The cutting machine according to any one of claims 1 to 2, **characterized in that** the lock member (31) includes a shaft (35) formed at a lower end of the lock member (31), and the safety cover (15) includes an engageable recessed portion (40) formed in the safety cover (15), wherein a rotation of the lock member (31) is restricted by engagement of the shaft (35) with the engageable recessed portion (40).

4. The cutting machine according to any one of claims 1 to 3, **characterized in that** the lock member (31) is rotatably attached to a boss (33) provided protrusively at a main body (7) side by a screw (34) screwed in the boss (33), the lock member (31) has an oblong hole (36) shaped like a circular arc of which a center of curvature coincides with the screw (34), the oblong hole (36) is provided in an upper portion of the lock member (31), a screw (37) is disposed inside the oblong hole (36) and screwed in the main body (7) side, the lock member (31) is rotatable to be angled according as the screw (37) slides relatively inside the oblong hole (36), and the lock member (31) is pressed by the biasing member (39) into the engagement position with the screw (37) being positioned at an end of the oblong hole (36).

5. The cutting machine according to claim 4, **characterized in that** the biasing member (39) includes a torsion spring (39) fitted on the boss (33), the torsion spring having a first end engaged with the lock member (31) and a second end engaged with the main body (7) side.

6. The cutting machine according to claim 1 or 2, **characterized in that** the main body (7) includes a holding tube (41) configured to hold the middle shaft (42) of the control member (32) in a manner that permits the middle shaft (42) to rotate.

7. The cutting machine according to any one of claims 1 to 6, **characterized in that** a rubber cover (46) is fitted on an end portion of the operable end (44).

8. The cutting machine according to claim 1, 2 or 6, **characterized in that** a torsion spring (50) is provided on the middle shaft (42) of the control member (32) to bias the swingable end (43) in such a direction that the swingable end (43) is caused to rotate away from the handle (14).

9. The cutting machine according to any one of claims 1 to 8, **characterized in that** the main body (7) includes a control panel (11) having a run switch (12) and a halt switch (13), and the handle (14) is provided at a side of the control panel (11).

10. The cutting machine according to claim 9, **characterized in that** the safety cover lock mechanism (30) is provided at a side of the control panel (11) opposite to the side at which the handle (14) is provided.

## Patentansprüche

1. Schneidemaschine, mit
einer Basis (2), und
einem Hauptkörper (7), der oberhalb der Basis (2) vorgesehen ist und dazu konfiguriert ist, dass er nach oben und nach unten bewegbar ist, bei der der Hauptkörper (7) ein drehendes Schneideblatt (8), einen Handgriff (14), eine Schutzabdeckung (15), eine Kopplung (17) und einen Schutzabdeckungsverriegelungsmechanismus (30) enthält, bei der der Handgriff (14) an der Vorderseite des Hauptkörpers (7) angeordnet ist und dazu konfiguriert ist, dass er zum Absenken des Hauptkörpers (7) betätigbar ist, bei der der Handgriff (14) einen Griff enthält, der eine längliche Form, die sich gerade in einem vertikalen Abschnitt erstreckt, bei der die Kopplung (17) zwischen dem Hauptkörper (7) und der Schutzabdeckung (15) angeordnet ist, bei der die Schutzabdeckung (15) zwischen einer Abdeckungsposition, in welcher die Schutzabdeckung (15) das Schneideblatt (8) abdeckt, und einer Freilegungsposition, in welcher das Schneideblatt (8) freigelegt ist, drehbar ist, bei der die Abdeckungsposition eine Position ist, in welcher die Schutzabdeckung (15) sich relativ zu dem Hauptkörper (7) in einem oberen Totpunkt davon befindet, bei der die Schutzabdeckung (15) zum Drehen gemäß einer Absenkbewegung des Hauptkörpers (7) durch die Kopplung (17) aus der Abdeckungsposition in Richtung der Freilegungsposition konfiguriert ist,
bei der der Schutzabdeckungsverriegelungsmechanismus (30) ein Verriegelungsbauteil (31) und ein Vorspannbauteil (39) enthält,
**dadurch gekennzeichnet, dass**
das Verriegelungsbauteil (31) dazu konfiguriert ist, zwischen einer Eingriffsposition, in welcher das Verriegelungsbauteil (31) mit der Schutzabdeckung (15), die sich in der Abdeckungsposition befindet, wenn der Hauptkörper (7) an dem oberen Totpunkt ist, in Eingriff steht, so dass sie eine Drehbewegung der Schutzabdeckung (15) einschränkt, und einer Entriegelungsposition, in welcher der Eingriff des Verriegelungsbauteils (31) mit der Schutzabdeckung (15) gelöst ist, bewegbar zu sein,
das Vorspannbauteil (39) dazu konfiguriert ist, das Verriegelungsbauteil (31) in Richtung der Eingriffsposition vorzuspannen,
der Schutzabdeckungsverriegelungsmechanismus (30) weiter ein Steuerungsbauteil (32) enthält, das eine einstückige Struktur aufweist, bei der das Steuerungsbauteil (32) mit dem Verriegelungsbauteil (31) verbunden ist, bei der das Steuerungsbauteil (32) ein betätigbares Ende (44) enthält, das angrenzend zu, parallel zu und rückwärtig des Griffs des Handgriffes (14) angeordnet ist, bei der eine Greifbetätigung des betätigbaren Endes (44) des Steuerungsbauteils (32) durch eine Hand bewirkt, dass sich das Verriegelungsbauteil (31) aus der Eingriffsposition in die Entriegelungsposition bewegt, und
das Steuerungsbauteil (32) weiter eine Mittelwelle (42), die parallel zu dem Griff des Handgriffes (14) angeordnet ist, und ein schwingbares Ende (43) enthält, bei der die Mittelwelle (42) ein erstes und ein zweites Ende aufweist, bei der das schwingbare Ende (43) mit dem ersten Ende der Mittelwelle (42) und mit dem Verriegelungsbauteil (31) in einer von der Mittelwelle (42) versetzten Position verbunden ist, bei der das betätigbare Ende (44) mit dem zweiten Ende der Mittelwelle (42) verbunden ist und einen Teil enthält, der sich parallel zu dem Griff des Handgriffes (14) in einer von der Mittelwelle (42) versetzten Position erstreckt, bei der das Steuerungsbauteil (32) dazu konfiguriert ist, dass es um die Mittelwelle (42) relativ zu dem Hauptkörper (7) drehbar ist, bei der das betätigbare Ende (44) dazu konfiguriert ist, zusammen mit dem Griff des Handgriffes (14) gegriffen zu werden, so dass eine Greifbetätigung des betätigbaren Endes (44) des Steuerungsbauteils (32) zusammen mit dem Griff des Handgriffes (14) bewirkt, dass das schwingbare Ende (43) des Steuerungsbauteils (32) schwingt, und dabei bewirkt, dass sich das Verriegelungsbauteil (31) aus der Eingriffsposition in die Entriegelungsposition bewegt.

2. Schneidemaschine nach Anspruch 1, **dadurch gekennzeichnet, dass** das Verriegelungsbauteil (31) ferner zum Drehen konfiguriert ist, wenn es sich aus der Eingriffsposition in die Entriegelungsposition bewegt, in welcher das Verriegelungsbauteil (31) geneigt ist, bei der das schwingbare Ende (43) des Steuerungsbauteils (32) mit dem Verriegelungsbauteil (31) in einer von einem Drehzentrum des Verriegelungsbauteils (31) versetzten Position durch einen Stift verbunden ist, der an einem von dem schwingbaren Ende (43) und dem Verriegelungsbauteil (31) vorgesehen ist, der in ein Durchgangsloch (47) eingeführt ist, das an dem anderen von dem schwingbaren Ende (43) und dem Verriegelungsbauteil (31) vorgesehen ist, bei der das Durchgangsloch (47) wie ein kreisrunder Bogen geformt ist, was es dem Verriegelungsbauteil (31) ermöglicht, weiter aus der Entriegelungsposition zu einer geneigten Position, in der das Verriegelungsbauteil (31) weiter geneigt ist, zu drehen, und
bei der die Schutzabdeckung (15) einen eingreifbaren Teil (51) enthält, der dazu konfiguriert ist, in Kontakt mit dem Verriegelungsbauteil (31) zu kommen und zu bewirken, dass sich das Verriegelungsbauteil (31) in Richtung der geneigten Position gemäß der Drehbewegung der Schutzabdeckung (15) in Richtung der Freilegungsposition, in welcher das Schneideblatt (8) freigelegt ist, bewegt.

3. Schneidemaschine nach einem der Ansprüche 1 bis 2, **dadurch gekennzeichnet, dass** das Verriegelungsbauteil (31) eine Welle (35) enthält, die an einem unteren Ende des Verriegelungsbauteils (31) ausgebildet ist, und die Schutzabdeckung (15) einen eingreifbaren ausgenommenen Teil (40) enthält, der in der Schutzabdeckung (15) ausgebildet ist, bei der eine Drehung des Verriegelungsbauteils (31) durch Eingriff der Welle (35) mit dem eingreifbaren ausgenommenen Teil (40) eingeschränkt ist.

4. Schneidemaschine nach einem der Ansprüche 1 bis 3, **dadurch gekennzeichnet, dass** das Verriegelungsbauteil (31) drehbar an einem Ansatz (33), der vorstehend an einer Seite des Hauptkörpers (7) vorgesehen ist, durch eine Schraube (34) angebracht ist, die in den Ansatz (33) geschraubt ist, bei der das Verriegelungsbauteil (31) ein längliches Loch (36) aufweist, das wie ein kreisrunder Bogen geformt ist, dessen Krümmungsmittelpunkt mit der Schraube (34) zusammenfällt, bei der das längliche Loch (36) an einem oberen Teil des Verriegelungsbauteils (31) vorgesehen ist, bei der eine Schraube (37) im Inneren des länglichen Loches (36) angeordnet ist und in die Seite des Hauptkörpers (7) eingeschraubt ist, bei der das Verriegelungsbauteil (31) drehbar ist, um entsprechend abgewinkelt zu werden, während die Schraube (37) im Inneren des länglichen Loches (36) relativ gleitet, und das Verriegelungsbauteil (31) durch das Vorspannbauteil (39) in die Eingriffsposition mit der Schraube (37) an einem Ende des länglichen Loches (36) positioniert gedrückt wird.

5. Schneidemaschine nach Anspruch 4, **dadurch gekennzeichnet, dass** das Vorspannbauteil (39) eine Torsionsfeder (39) enthält, die auf den Ansatz (33) gepasst ist, bei der die Torsionsfeder ein erstes Ende, das mit dem Verriegelungsbauteil (31) in Eingriff steht, und ein zweites Ende aufweist, das mit der Seite des Hauptkörpers (7) in Eingriff steht.

6. Schneidemaschine nach Anspruch 1 oder 2, **dadurch gekennzeichnet, dass** der Hauptkörper (7) ein Halterohr (41) enthält, das dazu konfiguriert ist, die Mittelwelle (42) des Steuerungsbauteils (32) in einer Weise zu halten, die es der Mittelwelle (42) ermöglicht, zu drehen.

7. Schneidemaschine nach einem der Ansprüche 1 bis 6, **dadurch gekennzeichnet, dass** eine Kautschukabdeckung (46) auf ein Endteil des betätigbaren Endes (44) gepasst ist.

8. Schneidemaschine nach Anspruch 1, 2 oder 6, **dadurch gekennzeichnet, dass** eine Torsionsfeder (50) auf der Mittelwelle (42) des Steuerungsbauteils (32) zum Vorspannen des schwingbaren Endes (43) in eine solche Richtung vorgesehen ist, dass bewirkt wird, dass sich das schwingbare Ende (43) weg von dem Handgriff (14) dreht.

9. Schneidemaschine nach einem der Ansprüche 1 bis 8, **dadurch gekennzeichnet, dass** der Hauptkörper (7) ein Steuerungspanel (11) enthält, das einen Einschalter (12) und einen Stoppschalter (13) aufweist, und der Handgriff (14) an einer Seite des Steuerungspanels (11) vorgesehen ist.

10. Schneidemaschine nach Anspruch 9, **dadurch gekennzeichnet, dass** der Schutzabdeckungsverriegelungsmechanismus (30) an einer Seite des Steuerungspanels (11) gegenüber der Seite, an welcher der Handgriff (14) vorgesehen ist, vorgesehen ist.

## Revendications

1. Machine à découper comprenant :
une base (2) ; et
un corps principal (7) situé au-dessus de la base (2) et configuré pour être mobile vers le haut et vers le bas, le corps principal (7) incluant une lame rotative (8), une poignée (14), un couvercle de sécurité (15), une tringlerie mécanique (17) et un mécanisme de blocage (30) de couvercle de sécurité, la poignée (14) étant disposée à l'avant du corps principal (7) et configurée pour être actionnable pour abaisser le corps principal (7), la poignée (14) incluant une prise ayant une forme oblongue s'étendant tout droit dans une section verticale, la tringlerie mécanique (17) étant disposée entre le corps principal (7) et le couvercle de sécurité (15), le couvercle de sécurité (15) pouvant tourner entre une position de protection dans laquelle le couvercle de sécurité (15) couvre la lame (8) et une position de non-protection dans laquelle la lame (8) est exposée, la position de protection étant une position dans laquelle le couvercle de sécurité (15) est placé par rapport au corps principal (7) au niveau d'un point mort haut de celui-ci, le couvercle de sécurité (15) étant configuré pour tourner selon un mouvement d'abaissement du corps principal (7) par la tringlerie mécanique (17) de la position de protection vers la position de non-protection,
dans laquelle le mécanisme de blocage (30) de couvercle de sécurité inclut un organe de blocage (31) et un organe de sollicitation (39),
**caractérisée en ce que**
l'organe de blocage (31) est configuré pour être mobile entre une position de prise dans laquelle l'organe de blocage (31) est en prise avec le couvercle de sécurité (15) qui se situe dans la position de protection quand le corps principal (7) se trouve au point mort haut, afin de limiter un mouvement de protection du couvercle de sécurité (15), et une position de désolidarisation dans laquelle la prise de l'organe de blocage (31) avec le couvercle de sécurité (15) est relâchée ;
l'organe de sollicitation (39) est configuré pour solliciter l'organe de blocage (31) vers la position de prise,
le mécanisme de blocage (30) de couvercle de sécurité inclut en outre un organe de commande (32) ayant une structure en une seule pièce, l'organe de commande (32) étant relié à l'organe de blocage (31), l'organe de commande (32) incluant une extrémité actionnable (44) disposée de manière adjacente, parallèle à la prise de la poignée (14) et vers l'arrière de celle-ci, dans lequel une action de saisie de l'extrémité actionnable (44) de l'organe de commande (32) par une main entraîne le déplacement de l'organe de blocage (31) depuis la position de prise vers la position de désolidarisation, et
l'organe de commande (32) inclut en outre un arbre central (42) disposé parallèlement à la prise (14) et une extrémité oscillante (43), l'arbre central (42) ayant une première extrémité et une seconde extrémité, l'extrémité oscillante (43) étant reliée à la première extrémité de l'arbre central (42) et à l'organe de blocage (31) dans une position décalée par rapport à l'arbre central (42), l'extrémité actionnable (44) étant reliée à la seconde extrémité de l'arbre central (42) et incluant une partie s'étendant parallèlement à la prise de la poignée (14) dans une position décalée par rapport à l'arbre central (42), l'organe de commande (32) étant configuré pour pouvoir tourner autour de l'arbre central (42) par rapport au corps principal (7), l'extrémité actionnable (44) étant configurée pour être saisie avec la prise de la poignée (14), de telle sorte qu'une action de saisie de l'extrémité actionnable (44) de l'organe de commande (32) avec la prise de la poignée (14) entraîne l'oscillation de l'extrémité oscillante (43) de l'organe de commande (32), amenant ainsi l'organe de blocage (31) à se déplacer de la position de prise à la position de désolidarisation.

2. Machine à découper selon la revendication 1, **caractérisée en ce que** l'organe de blocage (31) est en outre configuré pour tourner lors du déplacement de la position de prise à la position de désolidarisation dans laquelle l'organe de blocage (31) est incliné, dans laquelle l'extrémité oscillante (43) de l'organe de commande (32) est reliée à l'organe de blocage (31) dans une position décalée par rapport à un centre de rotation de l'organe de blocage (31) par une tige située dans un élément parmi l'extrémité oscillante (43) et l'organe de blocage (31) qui est insérée dans un trou débouchant (47) situé dans l'autre élément parmi l'extrémité oscillante (43) et l'organe de blocage (31), le trou débouchant (47) étant façonné comme un arc de cercle qui permet à l'élément de blocage (31) de tourner davantage de la position de désolidarisation à une position basculée dans laquelle l'organe de blocage (31) est davantage incliné ; et
dans laquelle le couvercle de sécurité (15) inclut une partie pouvant entrer en prise (51) configurée pour venir en contact avec l'organe de blocage (31) et amener l'organe de blocage (31) à se déplacer vers la position basculée selon le mouvement de rotation du couvercle de sécurité (15) vers la position de non-protection dans laquelle la lame (8) est exposée.

3. Machine à découper selon l'une quelconque des revendications 1 à 2, **caractérisée en ce que** l'organe de blocage (31) inclut un arbre (35) formé au niveau d'une extrémité inférieure de l'organe de blocage (31), et le couvercle de sécurité (15) inclut une partie évidée pouvant entrer en prise (40) formée dans le couvercle de sécurité (15), dans laquelle une rotation de l'organe de blocage (31) est limitée par l'entrée en prise de l'arbre (35) avec la partie évidée pouvant entrer en prise (40).

4. Machine à découper selon l'une quelconque des revendications 1 à 3, **caractérisée en ce que** l'organe de blocage (31) est fixé de manière rotative à un bossage (33) situé en saillie au niveau d'un côté corps principal (7) par une vis (34) vissée dans le bossage (33), l'organe de blocage (31) a un trou oblong (36) façonné comme un arc de cercle dont un centre de courbure coïncide avec la vis (34), le trou oblong (36) se situe dans une partie supérieure de l'organe de blocage (31), une vis (37) est disposée à l'intérieur du trou oblong (36) et vissée dans le côté corps principal (7), l'organe de blocage (31) peut tourner pour être incliné selon que la vis (37) coulisse relativement à l'intérieur du trou oblong (36), et l'organe de blocage (31) est pressé par l'organe de sollicitation (39) dans la position de prise avec la vis (37) positionnée à une extrémité du trou oblong (36).

5. Machine à découper selon la revendication 4, **caractérisée en ce que** l'organe de sollicitation (39) inclut un ressort de torsion (39) ajusté sur le bossage (33), le ressort de torsion ayant une première extrémité en prise avec l'organe de blocage (31) et une seconde extrémité en prise avec le côté corps principal (7).

6. Machine à découper selon la revendication 1 ou 2, **caractérisée en ce que** le corps principal (7) inclut un tube de maintien (41) configuré pour maintenir l'arbre central (42) de l'organe de commande (32) d'une manière qui permet à l'arbre central (42) de tourner.

7. Machine à découper selon l'une quelconque des revendications 1 à 6, **caractérisée en ce qu'**un couvercle en caoutchouc (46) est ajusté sur une partie d'extrémité de l'extrémité actionnable (44).

8. Machine à découper selon la revendication 1, 2 ou 6, **caractérisée en ce qu'**un ressort de torsion (50) est disposé sur l'arbre central (42) de l'organe de commande (32) afin de solliciter l'extrémité oscillante (43) dans une direction telle que l'extrémité oscillante (43) est amenée à tourner loin de la poignée (14).

9. Machine à découper selon l'une quelconque des revendications 1 à 8 **caractérisée en ce que** le corps principal (7) inclut un panneau de commande (11) ayant un commutateur de marche (12) et un commutateur d'arrêt (13), et la poignée (14) est disposée au niveau d'un côté du panneau de commande (11).

10. Machine à découper selon la revendication 9, **caractérisée en ce que** le mécanisme de blocage (30) de couvercle de sécurité se situe au niveau d'un côté du panneau de commande (11) opposé au côté au niveau duquel se trouve la poignée (14).
